(19) Europäisches Patentamt
European Patent Office
Office européen des brevets

(11) **EP 4 227 566 B1**

(12) **FASCICULE DE BREVET EUROPEEN**

(45) Date de publication et mention
de la délivrance du brevet:
**13.11.2024 Bulletin 2024/46**

(21) Numéro de dépôt: **23155878.4**

(22) Date de dépôt: **09.02.2023**

(51) Classification Internationale des Brevets (IPC):
**F16L 17/073** *(2006.01)* **F16L 37/23** *(2006.01)*

(52) Classification Coopérative des Brevets (CPC):
**F16L 37/23; F16L 17/073**

(54) **ELÉMENT FEMELLE DE RACCORD FLUIDIQUE ET RACCORD FLUIDIQUE COMPRENANT UN TEL ÉLÉMENT**

FLUIDANSCHLUSSBUCHSE UND FLUIDKUPPLUNG MIT EINER SOLCHEN BUCHSE

FEMALE FLUID CONNECTOR ELEMENT AND FLUID CONNECTOR COMPRISING SUCH AN ELEMENT

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **10.02.2022 FR 2201166**

(43) Date de publication de la demande:
**16.08.2023 Bulletin 2023/33**

(73) Titulaire: **Staubli Faverges**
**74210 Faverges-Seythenex (FR)**

(72) Inventeurs:
• **DURIEUX, Christophe**
**73200 GILLY SUR ISERE (FR)**
• **MARQUES BARROCA, Serafim**
**73200 ALBERTVILLE (FR)**

(74) Mandataire: **Lavoix**
**62, rue de Bonnel**
**69448 Lyon Cedex 03 (FR)**

(56) Documents cités:
GB-A- 1 408 537    KR-B1- 101 782 903
US-A- 2 708 124    US-A- 5 074 524

**Description**

La présente invention a trait à un élément femelle de raccord fluidique permettant de constituer, avec un embout complémentaire, un raccord assurant la jonction de deux canalisations de circulation d'un fluide, qui peut être gazeux ou liquide.

Il est connu de réaliser un raccord fluidique au moyen de deux éléments dont l'un est un embout de type « clamp » et qui peut être retenu en position dans l'autre élément du raccord aux moyens d'organes de verrouillage, tels que les billes ou équivalents.

Dans ce cadre, EP-A-3 220 034 divulgue un élément de raccord fluidique prévu pour coopérer avec un embout clamp et qui comprend des billes de verrouillage, ainsi qu'un joint qui vient en appui contre une arête externe ou une rainure frontale de l'embout en configuration accouplée. Cet élément de raccord fluidique donne globalement satisfaction. Toutefois, compte tenu de la géométrie de l'embout clamp et des éléments de verrouillage, il existe une possibilité de basculement de l'embout dans le corps de l'élément de raccord fluidique, autour d'un axe transversal à un axe longitudinal du raccord, y compris en configuration accouplée. L'étanchéité obtenue avec le joint n'est alors pas garantie. Lorsque la pression à l'extérieur du raccord est supérieure à la pression du fluide traversant le raccord, la différence de pression entre les deux côtés du joint peut déformer celui-ci, au point de rompre l'étanchéité entre le raccord et la cavité dans laquelle il est logé, avec un risque de fuite au sein du raccord.

GB-A-1408537 divulgue un raccord rapide dont l'élément femelle porte un joint d'étanchéité. L'élément femelle comprend deux manchons vissés ensemble, le joint étant serré entre les manchons. Le joint fait saillie vers l'intérieur dans une perforation d'insertion prévue dans le manchon antérieur pour l'élément mâle. Des billes d'arrêt sont logées dans des ouvertures situées dans une section d'extrémité du manchon antérieur. Pendant l'opération d'accouplement, les billes sont déplacées radialement vers l'extérieur contre une surface conique d'une bague métallique, déplaçant ainsi un collier de manoeuvre axialement vers l'avant en opposition à l'action d'un ressort, jusqu'à ce qu'une partie élargie du collier est amenée en correspondance avec lesdites billes. À ce moment-là, les billes s'enclenchent dans ladite partie élargie, dans une mesure telle qu'elles ne font plus saillie dans la perforation du manchon antérieur. Le profil de base du joint est à peu près rectangulaire avec un appendice profilé faisant saillie à sa circonférence extérieure et qui est enserré entre les deux manchons. À sa surface tournée vers le manchon postérieur et qui fait saillie dans la perforation de ce manchon, le joint est de forme plane et coopère en tant que siège avec un obturateur d'une valve de l'élément femelle. À sa surface opposée tournée vers la perforation du manchon antérieur, le joint est biseauté et est recouvert par un gradin biseauté de façon correspondante du manchon antérieur.

US-A-2708124 et KR-A-101782903 divulguent des raccords rapides dont l'élément femelle porte un joint avec une projection annulaire à section triangulaire. Dans ces raccords, l'élément mâle ne peut pas être un embout clamp.

Des problèmes analogues peuvent se poser avec les matériels connus, en cours d'accouplement et/ou lorsque la pression à l'intérieur du raccord est supérieure à la pression à l'extérieur du raccord.

C'est à ces problèmes qu'entend plus particulièrement remédier l'invention en proposant un nouvel élément femelle de raccord capable de coopérer avec un embout de type de clamp et dont la prise d'étanchéité est améliorée, à la fois en cours d'accouplement et en configuration accouplée d'un raccord fluidique incorporant un tel élément femelle de raccord, quel que soit le différentiel de pression entre la pression extérieure au raccord et la pression du fluide traversant le raccord.

A cet effet, l'invention concerne un élément femelle de raccord apte à être accouplé avec un embout complémentaire pour la jonction de deux canalisations de fluide, cet élément femelle de raccord comprenant un corps de réception de l'embout, ce corps étant centré sur un axe longitudinal et délimitant, au sein du corps, un canal interne de circulation de fluide qui s'étend entre un côté avant de l'élément femelle, orienté vers l'embout pendant un emmanchement de l'élément femelle et de l'embout, et un côté arrière de l'élément femelle, orienté vers une canalisation à laquelle cet élément femelle est raccordable. L'élément femelle de raccord comprend un mécanisme de verrouillage comprenant lui-même plusieurs organes de verrouillage, mobiles par rapport au corps, radialement à l'axe longitudinal, entre une position interne de blocage de l'embout dans le corps et une position externe de libération du passage de l'embout dans le corps, et une bague de blocage montée autour du corps et mobile entre une première position de blocage des organes de verrouillage dans leur position interne et une deuxième position dans laquelle la bague de blocage ne s'oppose pas au déplacement des organes de verrouillage vers leur position externe. L'élément femelle de raccord comprend également un joint d'étanchéité configuré pour coopérer avec l'embout, ce joint d'étanchéité étant logé dans le corps, autour du canal interne, et comprenant une base, disposée en regard, vers l'arrière, d'une surface proximale du corps et en regard, vers l'avant, d'une surface distale du corps, ainsi qu'une lèvre.

Conformément à l'invention

- la lèvre s'étend parallèlement à l'axe longitudinal et vers l'avant, en dépassant de la base et en présentant un bord libre avant;
- le joint d'étanchéité présente une entaille périphérique qui est disposée, radialement à l'axe longitudinal, entre la base et la lèvre, qui débouche sur l'avant du joint d'étanchéité et dont un fond est délimité sur l'arrière par une portion de jonction du joint d'étanchéité reliant la base et la lèvre ; et

- le joint d'étanchéité est configuré pour venir en appui arrière contre la surface proximale, dans l'alignement du bord libre avant de la lèvre, selon une direction parallèle à l'axe longitudinal.

Grâce à l'invention, le joint d'étanchéité peut venir en appui contre la surface proximale du corps de l'élément femelle de raccord et en appui contre l'embout complémentaire par la lèvre, ces deux appuis étant dans l'alignement l'un de l'autre selon l'axe longitudinal, ce qui garantit une prise d'étanchéité effective entre le joint d'étanchéité et le corps et entre le joint d'étanchéité et l'embout lors de l'accouplement des éléments du raccord, cette prise d'étanchéité étant aussi bien adaptée au cas d'une pression extérieure supérieure à la pression à l'intérieur du raccord qu'au cas d'une pression extérieure inférieure à la pression à l'intérieur du raccord. La base du joint d'étanchéité permet un positionnement précis de la lèvre vis-à-vis du corps de l'élément femelle de raccord, ainsi que vis-à-vis de l'embout complémentaire, tout particulièrement d'une rainure circonférentielle ménagée sur une face avant de cet embout. La construction du joint d'étanchéité, avec une base, une lèvre et une entaille périphérique permet une déformation relativement aisée de la lèvre en cours d'accouplement des éléments du raccord et en configuration accouplée. Il en résulte que l'effort nécessaire à l'accouplement des éléments du raccord est réduit. Une déformation de la lèvre en configuration accouplée demeure possible sous l'effet des pressions s'exerçant de part et d'autre du joint d'étanchéité, c'est-à-dire du différentiel de pression entre l'extérieur et l'intérieur du raccord. La construction du joint avec une base, une lèvre et une entaille permet également que la lèvre ait une longueur relativement importante, ce qui facilite sa déformation, sans augmenter de façon trop importante l'encombrement longitudinal du joint.

Selon des aspects avantageux mais non obligatoires de l'invention, un tel élément femelle de raccord peut incorporer une ou plusieurs des caractéristiques suivantes prises selon toute combinaison techniquement admissible :

- En configuration désaccouplée de l'élément femelle de raccord, un rapport entre, d'une part, une longueur de l'entaille périphérique mesurée parallèlement à l'axe longitudinal et, d'autre part, une longueur libre de la lèvre mesurée parallèlement à l'axe longitudinal entre le fond de l'entaille périphérique et le bord libre avant de la lèvre, est compris entre 0,4 et 0,6, de préférence égal à environ 0,5.
- En configuration désaccouplée de l'élément femelle de raccord, un rapport entre, d'une part, une longueur libre de la lèvre mesurée parallèlement à l'axe longitudinal entre le fond de l'entaille périphérique et le bord libre avant de la lèvre et, d'autre part, une longueur maximale du joint d'étanchéité, mesurée parallèlement à l'axe longitudinal, est supérieur ou égal à 0,7.
- En configuration désaccouplée de l'élément femelle de raccord, le bord libre avant de la lèvre présente une forme convexe.
- En configuration désaccouplée de l'élément femelle de raccord, à un même niveau radial, le joint d'étanchéité s'étend sans discontinuité depuis le bord libre avant jusqu'à une surface arrière du joint d'étanchéité configurée pour venir en appui arrière contre la surface proximale.
- En configuration désaccouplée de l'élément femelle de raccord, la lèvre a, à l'arrière du bord libre avant, une épaisseur radiale qui est constante.
- En configuration désaccouplée de l'élément femelle de raccord, un rapport entre, d'une part, une épaisseur radiale de l'entaille périphérique et, d'autre part, une épaisseur radiale de la lèvre, est inférieur ou égal à 0,4, à un même niveau le long de l'axe longitudinal.
- En configuration désaccouplée de l'élément femelle de raccord, au niveau de l'entaille périphérique, la base a une épaisseur radiale strictement supérieure à une épaisseur radiale de la lèvre.
- En configuration désaccouplée de l'élément femelle de raccord,

  - une surface axiale frontale du corps tournée vers l'avant fait face, selon une direction parallèle à l'axe longitudinal, aux organes de verrouillage lorsqu'ils sont dans leur position interne ;
  - la lèvre s'étend dans un volume situé, radialement à l'axe longitudinal, à l'intérieur de la surface axiale frontale; et
  - la lèvre fait saillie vers l'avant, par rapport à la surface axiale frontale, sur une longueur non nulle.

- Le corps comprend une paroi radiale interne ménagée, radialement à l'axe longitudinal, à l'intérieur de la surface proximale et, axialement le long de l'axe longitudinal, à l'avant de la surface proximale ;
- En configuration désaccouplée de l'élément femelle de raccord, une surface radiale interne de la lèvre est en regard, radialement à l'axe longitudinal, de la paroi radiale interne, avec un jeu radial d'épaisseur non nulle et la lèvre dépasse de la paroi radiale interne vers l'avant.
- La paroi radiale interne s'étend vers l'avant par rapport à la surface proximale, selon une direction parallèle à l'axe longitudinal, jusqu'au niveau de, ou en retrait de, une extrémité avant de l'entaille périphérique du joint d'étanchéité en appui arrière contre la surface proximale.
- La base du joint d'étanchéité est montée, selon une direction parallèle à l'axe longitudinal, entre la surface proximale et la surface distale, avec un jeu longitudinal inférieur à 5% d'une dimension longitudinale maximale mesurée entre la surface axiale proximale et la surface distale.

- En configuration désaccouplée de l'élément femelle de raccord, un diamètre interne minimal du joint d'étanchéité est défini par une dimension interne de la lèvre.
- La base est en contact radial externe avec le corps.

Selon un deuxième aspect, l'invention concerne un raccord qui comprend un élément femelle de raccord et un embout complémentaire, l'embout étant pourvu d'un canal interne de passage de fluide, d'une cavité externe de réception des organes de verrouillage de l'élément femelle de raccord en configuration accouplée du raccord, d'une face avant qui entoure le canal interne et d'une rainure circonférentielle ménagée sur la face avant. Conformément à l'invention, l'élément femelle de raccord est tel que mentionné ci-dessus et, en configuration accouplée du raccord, la lèvre du joint d'étanchéité de l'élément femelle de raccord est engagée dans, et en contact avec, la rainure circonférentielle.

De façon avantageuse, l'élément femelle de raccord est tel que décrit précédemment. Conformément à l'invention, lorsque le joint d'étanchéité est en appui arrière contre la surface proximale, dans l'alignement du bord libre avant de la lèvre selon une direction parallèle à l'axe longitudinal, un rapport entre, d'une part, une longueur sur laquelle la lèvre fait saillie vers l'avant de la surface axiale frontale du corps de l'élément femelle de raccord et, d'autre part, une profondeur maximale de la rainure circonférentielle par rapport à la face avant, est supérieur ou égal à 1, de préférence supérieur ou égal à 1,5.

L'invention sera mieux comprise et d'autres avantages de celle-ci apparaîtront plus clairement à la lumière de la description qui va suivre de deux modes de réalisation d'un élément femelle de raccord et d'un raccord conformes à son principe, donnée uniquement à titre d'exemple et faite en se référant aux dessins annexés, dans lesquels :

[Fig. 1] La figure 1 est une coupe longitudinale de principe des éléments mâle et femelle d'un raccord fluidique conforme à l'invention, en configuration désaccouplée ;
[Fig 2] La figure 2 est une vue d'une plus grande échelle du détail II à la figure 1 ;
[Fig 3] La figure 3 est une coupe analogue à la figure 1 en cours d'accouplement des éléments mâle et femelle du raccord fluidique ;
[Fig 4] La figure 4 est une coupe analogue à la figure 1 en configuration accouplée des éléments mâle et femelle du raccord fluidique ;
[Fig 5] La figure 5 est une vue à plus grande échelle du détail V de la figure 4.
[Fig 6] La figure 6 est une coupe analogue à la figure 4, en configuration accouplée, en cas de basculement d'un des éléments du raccord fluidique par rapport à l'autre ;
[Fig 7] La figure 7 est une vue analogue à la figure V, lorsqu'une première différence de pression s'applique entre l'extérieur et l'intérieur du raccord fluidique ;
[Fig 8] La figure 8 est une vue analogue à la figure V, lorsqu'une deuxième différence de pression s'applique entre l'extérieur et l'intérieur du raccord fluidique ;
[Fig 9] La figure 9 est une coupe analogue à la figure 1 pour un raccord fluidique conforme à un deuxième mode de réalisation d'invention ;
[Fig 10] La figure 10 est une vue à plus grande échelle du détail X à la figure 9 ; et
[Fig 11] La figure 11 est une coupe longitudinale, analogue à la figure 4, montrant le raccord fluidique des figures 9 et 10 en configuration accouplée.

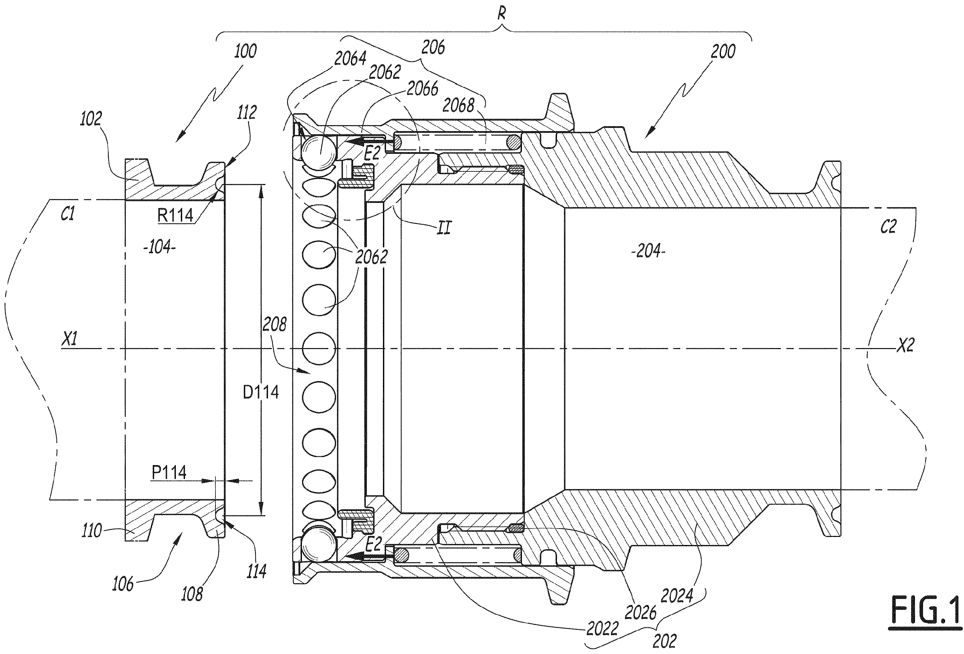

Le raccord fluidique R représenté aux figures 1 à 8 comprend un embout mâle 100 et un élément femelle 200 destiné à être accouplé à l'embout mâle 100. L'embout 100 et l'élément femelle 200 sont complémentaires.

Dans cet exemple, le raccord R est configuré pour raccorder deux canalisations de circulation de gaz.

L'embout mâle 100 est de type embout clamp, tel que défini par les normes DIN-32676 ou ASME BPE-2007 pour un embout de diamètre de bride égal à 25 mm. Pour un embout de diamètre extérieur de bride égal à 34, 50 ou 64 mm, celui-ci est défini par les normes ISO 2852, DIN 32676, BS 4825-3 et/ ASME BPE-2007.

Cet embout mâle comprend un corps monobloc 102, de préférence réalisé en métal qui définit un canal interne central 104 de circulation de fluide, lequel canal est raccordé, d'une façon connue en soi et sur l'arrière du corps 102, à une canalisation C1 de circulation de fluide, dans l'exemple de gaz. Pour la clarté du dessin, cette canalisation est représentée en trait mixte uniquement à la figure 1. L'embout 100 est dépourvu de soupape d'obturation de son canal interne 104.

L'embout 100 est centré sur un axe longitudinal X1 qui constitue un axe de symétrie pour le corps 102. En particulier, le canal interne 104 est cylindrique à section circulaire centrée sur l'axe X1.

Sur sa surface radiale externe, qui s'étend radialement autour de l'axe longitudinal X1 et est orientée à l'opposé de cet axe, le corps 102 est pourvu d'une gorge périphérique 106 qui constitue une cavité externe de réception d'un ou plusieurs organes de verrouillage. Ces organes de verrouillage peuvent être des billes de l'élément femelle 200, comme cela ressort des explications qui suivent. La gorge 106 est délimitée, axialement le long de l'axe X1, vers l'avant, par une bride 108 et, vers l'arrière, par une collerette 110, cette collerette étant facultative dans la mesure où le corps 102 peut conserver le diamètre réduit du fond de la gorge 106 en allant vers l'arrière de l'embout mâle 100.

A cet égard, on définit le côté avant d'un élément 100 ou 200 du raccord fluidique R comme le côté de cet élément orienté dans le sens de l'emmanchement ou de l'accouplement, c'est-à-dire orienté vers l'élément de raccord complémentaire pendant l'emmanchement. A l'inverse, on définit le côté arrière d'un élément du raccord fluidique R comme le côté orienté vers la canalisation à laquelle cet élément de raccord est raccordé, et opposé à l'élément complémentaire. Ainsi, dans l'exemple des figures 1 à 8, l'avant de l'embout mâle 100 est situé sur la droite de cet embout, alors que l'avant de l'élément femelle 200 est situé sur la gauche de cet élément. Pour un élément 100 ou 200 du raccord fluidique R, les expressions « l'avant » et « l'arrière » désignent des orientations tournées respectivement vers le côté avant et vers le côté arrière de cet élément 100 ou 200 du raccord fluidique R.

L'embout mâle 100 est pourvu d'une face avant 112, axiale, orientée vers l'élément femelle 200 dans la configuration des figures 1 à 8 et qui entoure le canal interne 104. Cette face avant 112 est équipée d'une rainure circonférentielle 114 qui s'étend tout autour de l'axe X1 et dont on note D114 le diamètre moyen et P114 la profondeur maximale par rapport à la face avant 112. La profondeur P114 est mesurée parallèlement à l'axe longitudinal X1.

On note R114 le rayon de courbure de fond de la rainure 114.

L'élément femelle 200 est centré sur un axe longitudinal X2 et comprend un corps 202 destiné à recevoir une partie avant de l'embout mâle 100 en configuration accouplée du raccord fluidique R.

Dans ce qui suit, sauf mention contraire, les adjectifs « longitudinal » et « radial », « externe » et « interne », et les adverbes « longitudinalement », « axialement » et « radialement » sont utilisés en référence à l'axe longitudinal X2. En outre, une surface est dite « radiale » lorsqu'elle s'étend radialement autour de l'axe longitudinal X2, « interne » lorsqu'elle est orientée vers cet axe et « externe » lorsqu'elle est orientée à l'opposé de cet axe. Une surface est dite « axiale » lorsqu'elle est perpendiculaire à l'axe longitudinal X2.

Le corps 202 est, de préférence, formé d'une partie avant monobloc 2022 et d'une partie arrière monobloc 2024 vissée sur la partie avant 2022, avec interposition d'un joint torique d'étanchéité 2026. Les parties 2022 et 2024 sont réalisées en métal, de préférence en acier.

Le corps 202 définit un canal central 204 de passage de fluide qui est raccordé, sur l'arrière du corps 202, à une canalisation C2 de circulation de fluide, dans l'exemple de gaz, laquelle est représentée en trait mixte, uniquement à la figure 1 pour la clarté du dessin.

L'élément femelle de raccord 200 est dépourvu de soupape d'obturation de son canal interne 204.

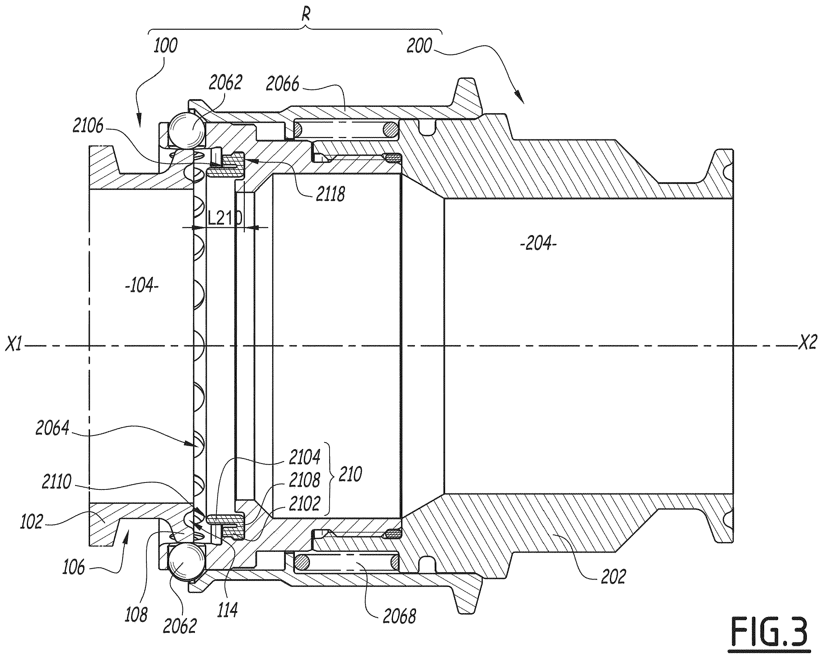

L'élément femelle de raccord 200 est équipé d'un mécanisme de verrouillage 206 qui comprend une rangée de vingt-quatre billes 2062 disposée dans autant de logements radiaux traversants 2064 ménagée dans le corps 202, à proximité de son bord avant 2021. Les logements 2064 sont traversants, en ce sens qu'ils débouchent à la fois sur une surface radiale externe 2023 et sur une surface radiale interne 2025 du corps 202, plus particulièrement de sa partie avant 2022. Cette surface radiale interne 2025 délimite radialement un volume de réception du corps 102 de l'embout 100 dans la configuration des figures 3 à 7.

On note D1 le diamètre de la surface 2025, qui est un diamètre interne du corps 202.

Chacun des logements 2064 est resserré au voisinage de la surface 2025 de façon à présenter un diamètre strictement inférieur à celui des billes 2062, ce qui limite le mouvement centripète des billes dans leurs logements, en direction de l'axe longitudinal X2.

Les billes 2062 sont mobiles, radialement à l'axe longitudinal X2, dans le corps 202 entre une position interne de blocage, dans laquelle elles dépassent de la surface radiale interne 2025 dans le volume de réception de l'embout mâle 100 et ne dépassent pas de la surface radiale externe 2023, et une position externe de libération, dans laquelle elles dépassent de la surface radiale externe 2023 et ne dépassent pas de la surface radiale interne 2025 dans le volume de réception du corps 102. Les billes 2062 en position interne sont plus proches de l'axe X2 qu'en position externe.

Une bague de blocage 2066 est montée mobile autour du corps 202, parallèlement à l'axe longitudinal X2, en étant chargée élastiquement vers le bord avant 2021 par un ressort 2068 interposé entre le corps 202 et la bague de blocage 2066. La bague de blocage 2066 et le ressort 2068 font partie du mécanisme de verrouillage 206. En particulier la bague de blocage 2066 est montée mobile autour de la partie avant 2022.

Le ressort 2068 exerce sur la bague de blocage 2066 un effort élastique E2, parallèle à l'axe longitudinal X2, réparti autour de celui-ci et dirigé vers le bord avant 2021. La bague de blocage 2066 est mobile, parallèlement à l'axe longitudinal X2, par rapport au corps 202, entre une première position de blocage des billes 2062 dans leur position interne et une deuxième position reculée dans laquelle la bague de blocage ne s'oppose pas au déplacement des billes vers leur position externe. La première position de la bague de blocage 2066 est visible aux figures 1, 2 et 4 à 8, et correspond aux configurations désaccouplée et accouplée, alors que sa deuxième position est visible à la figure 3. Dans la première position, la bague de blocage 2066 entoure radialement les billes de verrouillage 2062 et les maintient dans leur position interne de blocage.

La surface radiale interne de la partie avant 2022 du corps de 102 est étagée, dans le sens où elle présente plusieurs surfaces circulaires radiales et internes de diamètres différents.

La surface radiale interne 2025 est reliée par un congé 2026 à la surface annulaire axiale et frontale qui définit le bord avant 2021, lequel entoure une embouchure 208 de l'élément femelle 200.

Les logements 2064 débouchent sur toute leur périphérie sur la surface radiale interne 2025, laquelle constitue une première surface cylindrique interne du corps 202, en partant de l'embouchure 208.

Une deuxième surface radiale interne 2027 est ménagée en arrière de la première surface 2025 et délimitée sur l'avant par une première surface axiale 2028, qui est frontale, en ce sens qu'elle est orientée vers l'avant de l'élément femelle de raccord 200. Lorsque les billes 2062 sont en position interne, en particulier en configuration désaccouplée du raccord R, les billes 2062 s'étendent partiellement, dans le volume de réception du corps 102, en regard de la surface axiale frontale 2028, selon une direction parallèle à l'axe longitudinal X2.

On note D2 le diamètre de la surface 2027 qui est strictement inférieur au diamètre D1, ce qui correspond au fait que la surface axiale frontale 2028 a une largeur radiale non nulle.

Une troisième surface radiale interne 2029 est ménagée en arrière de la deuxième surface radiale interne 2027 avec un diamètre D3 strictement supérieur au diamètre D2 et, de préférence, inférieur ou égal au diamètre D1.

Un chanfrein tronconique 2030 relie les deuxième et troisième surfaces radiales internes 2027 et 2029. Ce chanfrein 2030 diverge vers l'arrière du corps 202 et est tourné vers l'arrière de l'élément femelle de raccord 200.

Une deuxième surface axiale 2031, qui est frontale, limite sur l'arrière la troisième surface radiale interne 2029 et la relie à une surface radiale externe 2032 d'une paroi radiale interne 2033 du corps 202. La paroi radiale interne 2033 est ménagée, radialement à l'axe longitudinal X2, à l'intérieur de la surface axiale 2031 et, axialement le long de l'axe longitudinal, à l'avant de cette surface axiale et frontale. On note 2034 une surface axiale frontale de la paroi radiale interne 2033. On note 2035 une surface radiale interne de cette paroi radiale interne 2033. La surface 2035 contribue à délimiter radialement le canal interne 204 de l'élément femelle de raccord 200. On note L203 la longueur de la paroi radiale interne 2033, c'est-à-dire la distance axiale entre les surfaces 2031 et 2034. On note D4 le diamètre de la surface radiale externe 2032, ce diamètre étant strictement inférieur au diamètre D2.

Le chanfrein 2030, la surface radiale interne 2029, la surface axiale 2031 et la surface radiale externe 2032 définissent ensemble une chambre C202 du corps 202 dans laquelle est partiellement logé un joint d'étanchéité 210 destiné à coopérer avec l'embout 100, plus particulièrement destiné à coopérer par contact avec le corps 102 de l'embout 100. Le joint d'étanchéité 210 est monté sur le corps 202 autour du canal interne 204. Les surfaces 2030 et 2031 forment respectivement une surface distale et une surface proximale de la chambre C202. Les surfaces 2030, 2029, 2031 et 2032 sont solidaires du corps 202, sans possibilité de mouvement par rapport à celui-ci. En pratique, ces surfaces 2030, 2029, 2031 et 2032 sont toutes formées sur la partie avant 2022 du corps 202, laquelle partie avant 2022 est monobloc.

Le joint d'étanchéité 210 est un joint de forme, de préférence obtenu par moulage d'élastomère de type EPDM (éthylène-propylène-diène monomère). En variante, le joint d'étanchéité 210 peut être réalisé en MBR (butadiène acrylonitrile), en FPM (caoutchouc fluoré) ou FFKM (perfluoroélastomère). De préférence le joint d'étanchéité 210 a une dureté de 70 Shore A.

Le joint d'étanchéité 210 est monobloc et de révolution autour de son axe central X10 qui est confondu avec l'axe longitudinal X2 en configuration montée du joint d'étanchéité 210 sur le corps 202 et en configuration désaccouplée de l'élément femelle 200.

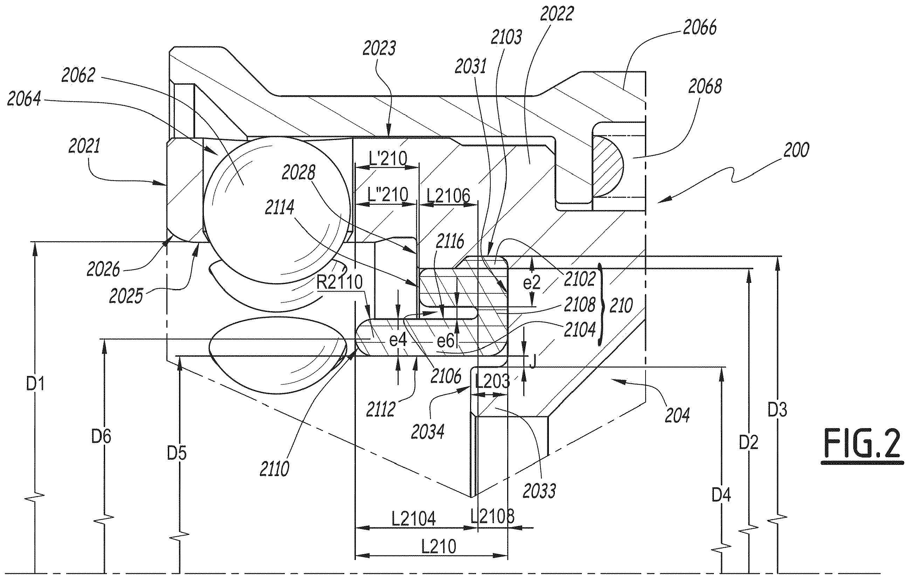

Le joint d'étanchéité 210 comprend une base 2102 et une unique lèvre 2104. La base 2102 s'étend radialement à l'extérieur de la lèvre 2104 par rapport à l'axe X10 et à l'axe X2 en configuration montée du joint d'étanchéité 210 sur le corps 202. Avant montage du joint d'étanchéité 210 sur le corps 202, la base 2102 présente, en section dans le plan de la figure 2, une forme globalement rectangulaire avec une épaisseur radiale e2 mesurée radialement à l'axe X10.

Une entaille périphérique 2106 est ménagée entre la base 2102 et la lèvre 2104 radialement à l'axe X10, donc à l'axe longitudinal X2 en configuration montée du joint d'étanchéité 210 sur le corps 202. L'entaille 2106 débouche sur l'avant du joint d'étanchéité 210. En particulier, l'entaille périphérique 2106 débouche sur l'avant du joint d'étanchéité 210 tout autour de l'axe X10. Elle est borgne sur l'arrière, où son fond 2107 est délimité par une portion de jonction 2108 entre la base 2102 et la lèvre 2104. La portion de jonction 2108 est monobloc avec les parties 2102 et 2104 du joint d'étanchéité 210. On note L2108 la longueur de la portion de jonction mesurée parallèlement à l'axe longitudinal X2.

L'extrémité libre avant de la lèvre 2104 est disposée au niveau d'un bord avant 2110 de la lèvre 2104, annulaire et centré sur l'axe X10, donc sur l'axe longitudinal X2 en configuration montée du joint d'étanchéité 210 sur le corps 202 et en configuration désaccouplée du raccord R. Ce bord libre avant 2110 est orienté vers l'avant, vers l'embouchure 208 et vers le bord avant 2021.

On note 2112 une surface radiale interne de la lèvre 2104. On note D5 le diamètre interne minimal du joint d'étanchéité 210. Ce diamètre interne minimal D5 est défini par la surface radiale interne 2112 de la lèvre 2104. En d'autres termes, le diamètre interne minimal du joint d'étanchéité 210 est défini par une dimension interne de la lèvre 2104.

La surface radiale interne 2112 est partiellement en regard, selon une direction radiale, de la paroi radiale interne 2033, plus particulièrement de sa surface radiale externe 2032.

On note 2116 une surface radiale externe de la lèvre 2104. L'entaille 2106 est délimitée radialement, du côté de la lèvre 2104, par la surface 2116. En outre, la surface 2116 dépasse de l'entaille 2106 vers l'avant et se prolonge jusqu'au bord libre avant 2110.

Lorsque la chambre C202 est vide de tout joint d'étanchéité 210, les surfaces distale 2030 et proximale 2031 de la chambre C202 sont en regard l'une de l'autre parallèlement à l'axe longitudinal X2. En configuration montée du joint d'étanchéité 210 sur le corps 202, la base 2102 est disposée en partie en regard axial, vers l'avant, de la surface distale de la chambre C202, formée par le chanfrein 2030, et en regard, vers l'arrière, de la surface proximale de cette chambre, formée par la surface 2031. Les notions de « proximale » et « distale » sont définies à partir du côté arrière du corps 202, c'est-à-dire vues de la canalisation C2. Dans une même zone radiale définie par la différence des diamètres D2 et D3, le joint d'étanchéité 210 est axialement logé entre les surfaces proximale et distale de la chambre C202. Ceci est effectué avec un jeu longitudinal réduit entre le joint d'étanchéité 210 et la chambre C202, ce jeu longitudinal étant inférieur ou égal à 5% de la dimension longitudinale maximale mesurée selon l'axe longitudinal X2 entre les surfaces distale 2030 et proximale 2031. Ce jeu longitudinal peut être choisi inférieur à 0,1 mm. Dans l'exemple des figures 1 à 8, ce jeu longitudinal est nul.

À l'état de repos non-monté dans le corps 202, la base 2102 du joint d'étanchéité 210 présente des dimensions radiales externes supérieures ou égales aux dimensions radiales internes des surfaces 2029 et 2030 du corps 202 qui définissant la chambre C202 radialement sur l'extérieur. Ainsi, en configuration montée du joint d'étanchéité 210 où les axes X2 et X10 sont confondus, la base 2102 est en contact radial externe, par sa surface radiale externe 2103, avec le chanfrein 2030 et avec la troisième surface radiale interne 2029. Ce contact est exclusivement radial au niveau de la troisième surface radiale interne 2029. Du fait de l'orientation du chanfrein 2030 qui est tronconique et divergeant vers l'arrière, ce contact est radial, ce qui limite le mouvement du joint d'étanchéité 210 par rapport au corps 202, radialement vers l'extérieur. De plus, également du fait de l'orientation du chanfrein 2030, ce contact est longitudinal, ce qui limite le mouvement du joint d'étanchéité 210 par rapport au corps 202 vers l'avant.

En variante non représentée, le joint d'étanchéité 210 n'est en contact radial externe qu'avec le chanfrein 230 ou qu'avec la troisième surface radiale interne 2029.

Lorsque le joint d'étanchéité 210 est au repos et monté dans le corps 202, c'est-à-dire en configuration désaccouplée de l'élément femelle 200, la lèvre 2104 s'étend depuis la portion de jonction 2108 vers l'avant de l'élément femelle de raccord 200, parallèlement à l'axe longitudinal X2 et au-delà de la base 2102. Les surfaces radiales interne 2112 et externe 2116 sont des surfaces cylindriques à section circulaire.

On note 2114 une surface axiale, frontale et avant, de la base 2102. La surface axiale 2114 délimite l'extrémité avant de l'entaille périphérique 2106. La lèvre 2104 dépasse vers l'avant de la base 2102 sur une longueur L'210 mesurée parallèlement à l'axe longitudinal X2 entre le bord avant 2110 de la lèvre 2104 et la surface axiale 2114. La longueur L'210 est la longueur maximale de la lèvre 2104 qui dépasse de l'entaille 2106. La longueur L'210 est non nulle.

La lèvre 2104 dépasse vers l'avant, par rapport à une partie du corps 202 qui définit la surface radiale interne 2027, sur une longueur L"210 mesurée parallèlement à l'axe longitudinal X2 entre le bord avant 2110 et la surface axiale frontale 2028 qui délimite la surface radiale interne 2027 sur l'avant. La longueur L"210 est la longueur maximale de la lèvre 2104 qui dépasse de la surface axiale frontale 2028. La longueur L"210 est non nulle.

La longueur L"210 est choisie strictement supérieure à la profondeur P114, de préférence supérieure ou égale à 1,5 fois cette profondeur.

On définit la longueur libre L2104 de la lèvre 2104 comme la distance, mesurée parallèlement à l'axe longitudinal X2 ou à l'axe X10, entre le bord avant 2110 et le fond 2107 de l'entaille 2106 délimité par la portion de jonction 2108 en configuration désaccouplée de l'élément de raccord 200. La longueur libre L2104 est donc la longueur maximale de la lèvre 2104 qui s'étend à l'avant à partir du fond 2107 de l'entaille 2106. Le rapport L2104/L210 entre la longueur libre L2104 et une longueur maximale L210 du joint d'étanchéité 210, mesurée parallèlement à l'axe longitudinal X2 ou à l'axe X10, est supérieur ou égal à 0,7. Dans ce mode de réalisation, ce rapport est égal à environ 0,8.

On note e4 l'épaisseur radiale de la lèvre 2104 mesurée radialement à l'axe X10. L'épaisseur radiale e4 de la lèvre 2104 est bien inférieure à la longueur libre L2104 de la lèvre 2104, par exemple au moins 2 fois inférieure à la longueur libre L2104, de préférence au moins 2,5 fois inférieure à la longueur libre L2104, si bien que la lèvre 2104 s'étend essentiellement parallèlement à l'axe longitudinal X2 dans le plan de coupe des figures.

L'épaisseur radiale e4 est sensiblement constante sur au moins 70% de la longueur libre L2104 de la lèvre 2104 dans le sens où l'épaisseur radiale e4 varie de moins de 15%, de préférence moins de 10%, sur au moins 70% de la longueur libre L2104. En particulier l'épaisseur radiale e4 de la lèvre 2104 à l'arrière du bord libre avant 2110, c'est-à-dire entre le fond 2107 de l'entaille 2106 et l'extrémité arrière du bord libre avant 2110, est sensiblement constante. En outre, l'épaisseur radiale e2 est strictement supérieure à l'épaisseur radiale e4 au niveau de l'entaille 2106.

Au niveau de son bord avant 2110, la lèvre 2104 présente, en section dans le plan de la figure 2, une forme convexe, avec sa convexité tournée vers l'avant, plus particulièrement une forme convexe de demi tore avec un rayon de courbure R2110 qui relie les surfaces radiales interne 2112 et externe 2116. Le rayon de courbure R2110 est strictement inférieur, de préférence au moins 1,5 fois inférieur, au rayon de courbure R114.

L'épaisseur radiale de la lèvre 2104 au niveau longitudinal du bord libre avant 2110 est donc inférieure à l'épaisseur radiale de la lèvre 2104 en arrière du bord libre avant 2110. L'épaisseur radiale e4 en arrière du bord libre avant 2110 est égale au double du rayon de courbure R2110 du bord libre avant 2110.

Le joint d'étanchéité 210 est configuré pour venir en appui arrière, contre la surface proximale 2031 de la chambre C202, par sa surface arrière 2118. On note 2118A une portion de la surface arrière 2118 qui est dans l'alignement longitudinal de la lèvre 2104, c'est-à-dire alignée avec la lèvre 2014 selon une direction parallèle à l'axe X2 en configuration désaccouplée de l'élément femelle de raccord 200. Cette portion de surface 2118A est, en particulier, dans l'alignement longitudinal du bord avant 2110. Dans sa position en appui arrière contre la surface proximale 2031, le joint d'étanchéité 210 est notamment en appui contre cette surface par la portion de surface 2118A. La longueur maximale L210 du joint d'étanchéité 210 est mesurée parallèlement à l'axe longitudinal X2 ou à l'axe X10, entre la surface arrière 2118 et le bord avant 2110 en configuration désaccouplée. Dans cette position, la lèvre 2104 dépasse vers l'avant, par rapport à la surface axiale frontale 2028 sur la longueur L''210, par rapport à la surface axiale frontale 2034 sur une longueur non nulle égale à la différence entre les longueurs L210 et L203, et par rapport à la surface axiale frontale avant 2114 de la base 2102 sur la longueur L'210.

Comme visible notamment à la figure 2, sur laquelle le joint d'étanchéité 210 est en appui arrière contre la surface proximale 2031, la surface axiale, frontale avant 2114 est légèrement en retrait vers l'arrière par rapport à la surface axiale frontale 2028. C'est pourquoi la longueur L'210 est strictement supérieure à la longueur L''210. Par légèrement en retrait, on entend que la surface frontale avant 2114 est en retrait de moins de 0,5 mm par rapport à la surface axiale frontale 2028.

En variante non représentée, les surfaces 2028 et 2114 peuvent être affleurantes. Dans ce cas, les longueurs L'210 et L''210 sont égales.

On note L2106 la longueur de l'entaille 2106 mesurée parallèlement aux axes X2 et X10 confondus, en configuration désaccouplée de l'élément de raccord 200. La longueur L2106 est la longueur maximale de l'entaille 2106 et est mesurée parallèlement à l'axe longitudinal X2 entre le fond 2107 de l'entaille 2106 et la surface axiale frontale avant 2114 de la base 2102. Le rapport L2106/L2104 est compris entre 0,4 et 0,6, de préférence égal à environ 0,5. Ainsi, la base 2102 s'étend, vers l'avant par rapport à la portion de jonction 2108 et jusqu'à la surface 2114, sur une longueur qui est égale, à 10% près, à la moitié de la longueur libre L2104.

On a la relation suivante :

$$L2104 = L2106 + L'210$$

L'entaille 2106 constitue un volume libre pour la déformation de la lèvre en cours d'accouplement et en configuration accouplée.

On note e6 l'épaisseur radiale de l'entaille 2106 qui est sensiblement constante sur sa longueur L2106 en configuration désaccouplée de l'élément femelle. Dans cette configuration, à un même niveau le long de l'axe longitudinal X2, le rapport e6/e4 est compris entre 0,25 et 0,4, de préférence égal à environ 0,33. En pratique, l'épaisseur e6 est choisie inférieure ou égale à 1 mm, de préférence inférieure ou égale à 0,5 mm.

Au repos, c'est-à-dire en configuration désaccouplée de l'élément femelle de raccord 200, un jeu radial J d'épaisseur non nulle existe, entre la surface radiale interne 2112 de la lèvre 2104 et la surface radiale externe 2032 de la paroi radiale interne 2033. Ceci résulte du fait que le diamètre D5 est strictement supérieur au diamètre D4. L'épaisseur de ce jeu radial, c'est-à-dire la moitié de la différence entre les diamètres D5 et D4, est choisie inférieure ou égale à 0,5 mm. Ce jeu radial constitue un volume libre pour la déformation de la lèvre 2104 en cours d'accouplement et en configuration accouplée.

En configuration désaccouplée de l'élément femelle de raccord 200, la lèvre 2104 s'étend à une distance de la surface radiale interne 2025 supérieure à la dimension maximale sur laquelle les billes de verrouillage 2062 font saillie radialement vers l'intérieur, dans le volume de réception du corps 102, lorsqu'elles sont dans leur position interne de blocage de l'embout 100. En particulier, la lèvre 2104 s'étend dans un volume situé, radialement à l'axe longitudinal X2, à l'intérieur de la surface axiale frontale 2028.

On note D6 le diamètre moyen de la lèvre 2104, c'est-à-dire un diamètre pris à mi-distance entre les surfaces radiales interne 2112 et externe 2116. Le joint d'étanchéité 210 peut être configuré de telle sorte que l'on a la relation : 2,4 mm $\leq$ D1-D6 $\leq$ 3,9 mm. En particulier, le diamètre moyen D6 est égal au diamètre moyen D114 de la rainure circonférentielle 114 de l'embout 100, à 10% près.

La surface radiale interne 2112 de la lèvre 2104 est reliée par un congé à la surface arrière 2118. Ainsi, en configuration désaccouplée, à un niveau situé, radialement à l'axe longitudinal X2, entre les surfaces radiales interne 2112 et externe 2116 de la lèvre 2104, le joint d'étanchéité 210 s'étend sans discontinuité depuis la portion de surface 2118A jusqu'au bord libre avant 2110. En particulier, le joint d'étanchéité 210 s'étend sans discontinuité depuis la portion de surface 2118A jusqu'au bord libre avant 2110 au niveau radial du diamètre moyen D6.

Le rapport L203/L210 est compris entre 0,1 et 0,3 de préférence entre 0,15 et 0,25.

La longueur L203 est inférieure ou égale à la somme des longueurs L2106 et L2108. Ainsi, la paroi radiale interne 2033 s'étend vers l'avant par rapport à la paroi proximale 2031 jusqu'au niveau de, ou en retrait vers l'arrière, de l'extrémité avant de l'entaille 2106. En particulier, la paroi radiale interne 2033 s'étend vers l'avant par rapport à la paroi proximale 2031 jusqu'au niveau de, ou en retrait vers l'arrière, du fond 2107 de l'entaille 2106.

À l'accouplement, la bague de blocage 2066 est manipulée par l'opérateur à l'encontre de l'effort élastique E2 exercé par le ressort 2068 pour être amenée dans sa deuxième position reculée. Les corps 102 et 202 sont disposés en regard l'un de l'autre, en alignant les axes X1 et X2. Le corps 102 de l'embout 100 est introduit dans le volume de réception de l'élément femelle de raccord 200, par l'embouchure 208, et repousse radialement les billes 2062 dans leur position externe, comme représenté à la figure 3. Le corps 102 parvient au contact de la lèvre 2104 au niveau du bord libre avant 2110 qui constitue le bord avant du joint d'étanchéité 210.

Ce mouvement se poursuit jusqu'à ce que la gorge 106 soit alignée, le long de l'axe longitudinal X2, avec les billes 2062. L'opérateur peut alors relâcher la bague 2066 qui est repoussée, par l'effort élastique E2 exercé par le ressort 2068, dans une configuration où elle bloque les billes 2062 en configuration engagée dans la gorge 106, c'est-à-dire dans leur position interne.

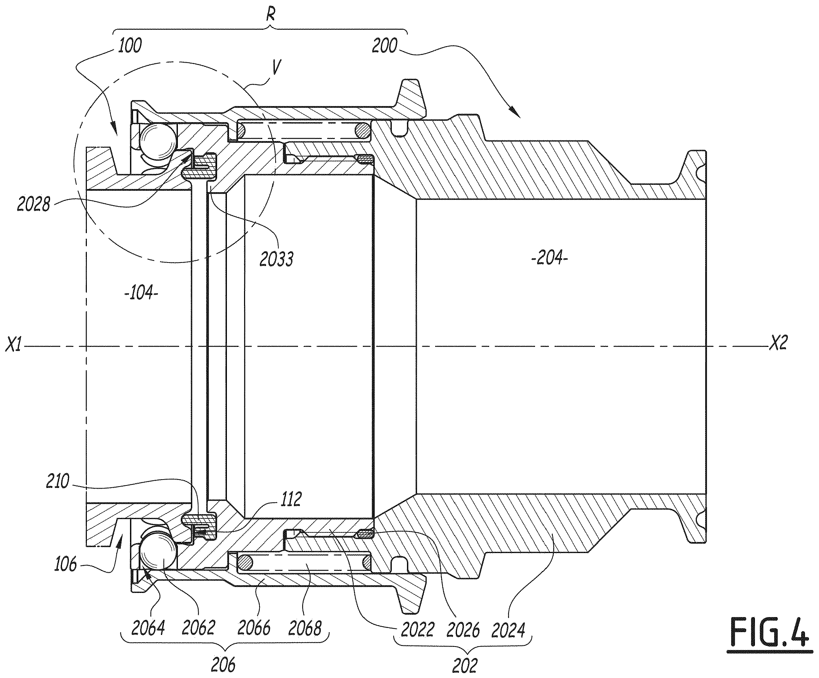

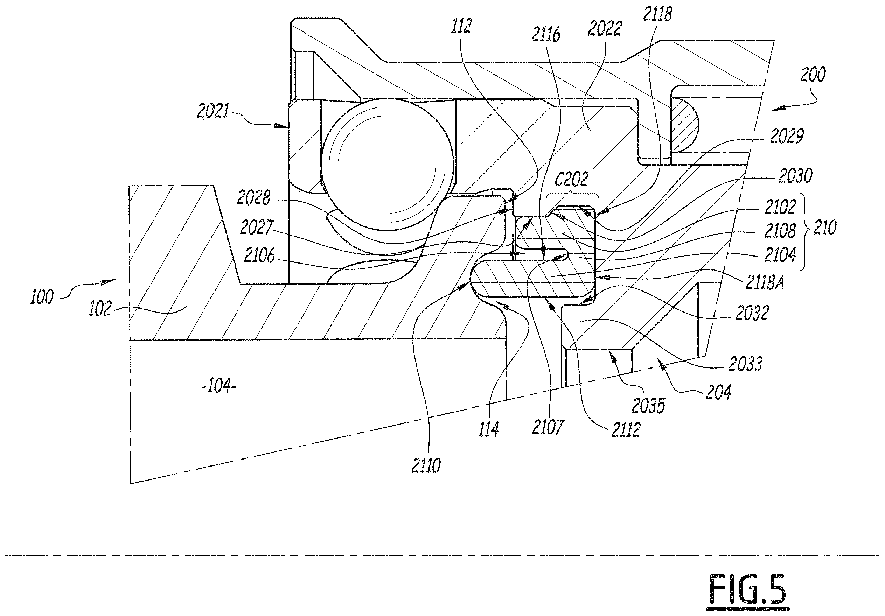

Dans cette configuration, les éléments 100 et 200 du raccord sont accouplés, comme représenté aux figures 4 et 5.

Au cours de l'accouplement, la lèvre 2104 du joint d'étanchéité 210, qui est alignée avec la rainure circonférentielle 114 selon une direction parallèle à l'axe longitudinal X2, pénètre dans cette rainure et vient au contact du fond de cette rainure. Ceci découle notamment de la valeur du rapport entre la distance L"210 et la profondeur P114. Ainsi, la lèvre 2104 est engagée dans, et en contact avec, la rainure circonférentielle 114, avec le bord libre avant 2110 en contact avec une surface du corps 102 délimitant la rainure circonférentielle 114, plus précisément avec le fond de la rainure circonférentielle 114. Le joint d'étanchéité 210 est en contact arrière avec la surface proximale 2031 au moins au niveau de la portion de surface 2118A. L'introduction du corps 102 de l'embout 100 dans le corps 202 de l'élément femelle de raccord 200 a ainsi pour effet de comprimer longitudinalement le joint d'étanchéité 210, au niveau de la lèvre 2104, entre le corps 102 et la surface proximale 2031 de la chambre C202, ce qui assure l'étanchéité entre les corps 102 et 202, alors que les canaux internes 104 et 204 communiquent pour laisser s'écouler le fluide qui traverse le raccord fluidique R.

La configuration de la lèvre 2104 des figures 4 et 5 correspond par exemple à une configuration où des pressions équivalentes s'exercent de part et d'autre du joint d'étanchéité 210.

Comme le rayon de courbure R2110 est strictement inférieur au rayon de courbure R114, un contact franc est établi entre le bord libre avant 2110 et le fond de la rainure circonférentielle 114.

Au cours de l'accouplement des éléments mâle et femelle et en configuration accouplée, la lèvre 2104 se déforme élastiquement sous les efforts de compression uniaxiale exercés sur le joint d'étanchéité 210 par les corps 102 et 202, éventuellement par flambage selon un aspect de l'invention qui n'est pas représenté sur les figures 4 et 5, et tend à repousser le corps 102 hors du corps 202, alors que, en configuration accouplée, les billes de verrouillage 2062 s'opposent à un mouvement de retrait du corps 102 par rapport au corps 202. En d'autres termes, en configuration accouplée, les billes de verrouillage bloquent l'embout 100 dans le corps 202, à l'encontre d'un effort exercé par la lèvre 2104 déformée élastiquement dans cette configuration.

Dans la configuration accouplée représentée aux figures 4 et 5, sur toute sa périphérie, la face avant 112 du corps 102 n'est pas contact avec la surface axiale frontale 2028. Plus précisément, une partie annulaire de la face avant 112, qui entoure radialement la rainure 114, est en regard longitudinal de la surface axiale frontale 2028 et à distance de cette surface axiale frontale, sans contact entre la face avant 112 et la surface axiale frontale 2028. Dans cette position, le corps 102 n'entre pas non plus en contact avec la paroi radiale interne 2033 qui est sensiblement en retrait du bord avant 2110.

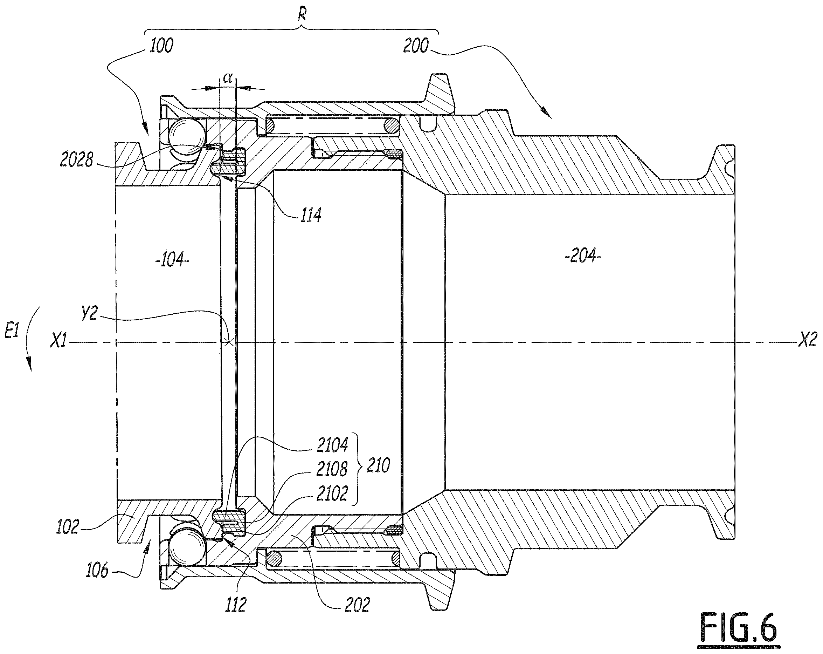

Si, à partir de la configuration accouplée des figures 4 et 5, le corps 102 de l'embout 100 est soumis à un effort de pivotement autour d'un axe Y2 perpendiculaire aux axes X1 et X2, comme représenté par la flèche E1 à la figure 6, un basculement relatif des corps 102 et 202 peut avoir lieu du fait du jeu existant entre les billes 2062 et la gorge 106. L'angle de basculement α est limité par une mise en contact localisé de la face avant 112 du corps 102 avec la surface axiale frontale 2028, comme représenté en partie basse de la figure 6. Y compris dans cette position, le corps 102 n'entre pas en contact avec la paroi radiale interne 2033.

Dans cette configuration accouplée basculée, la partie de la lèvre 2104 représenté en partie basse de la figure 6 est plus comprimée que la partie de cette lèvre représentée en partie haute de cette figure.

Le joint d'étanchéité 210 est configuré pour accommoder de telles variations des efforts subis par la lèvre 2104, tout en restant en contact avec les corps 202 et le corps 102 tout autour de l'axe X2.

Le basculement est limité par le fait que la face avant 112 vienne localement en contact avec la surface axiale frontale 2028, ce qui limite la valeur maximale de l'angle de basculement α et réduit la sollicitation du joint d'étanchéité 210 lors du basculement.

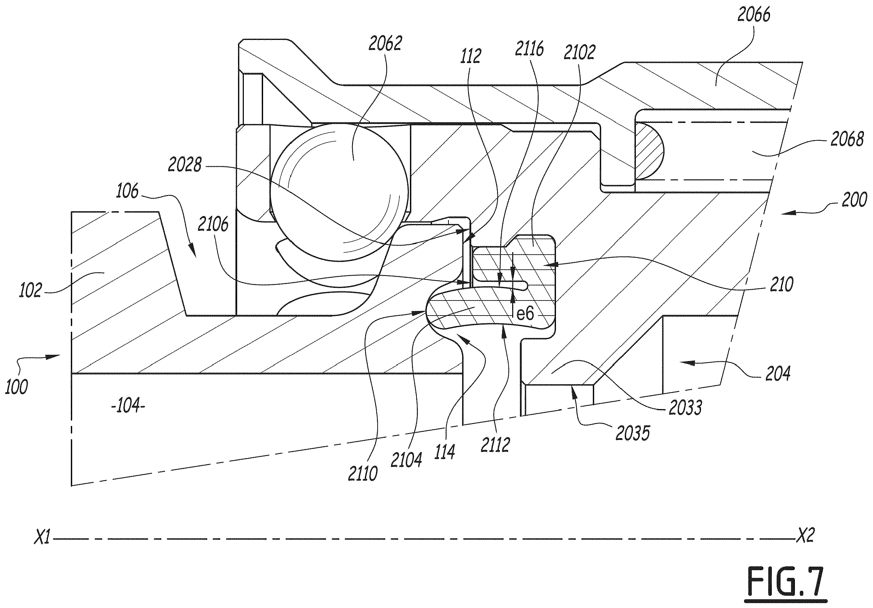

D'autre part, comme représenté à la figure 7, lorsqu'un fluide avec une pression supérieure à la pression régnant à l'extérieur du raccord R traverse les canaux internes 104 et 204 en configuration accouplée, la pression la plus élevée s'applique sur la surface radiale interne 2112 de la lèvre 2104, ce qui tend à plaquer la lèvre, particulièrement le bord avant 2110, contre un bord radial externe de la rainure 114 et à déformer la lèvre 2104 radialement vers l'extérieur, par rapport à une configuration où les pressions sont équivalentes de part et d'autre du joint d'étanchéité 210, c'est à dire entre l'extérieur et l'intérieur du raccord. Cela confère à la surface radiale interne 2112 de la lèvre 2104 une forme bombée, avec sa concavité tournée vers l'axe longitudinal X2.

L'épaisseur e6 de l'entaille 2106 diminue localement et la surface radiale externe 2116 se rapproche localement de la base 2102, par rapport à la configuration désaccouplée de l'élément femelle 200.

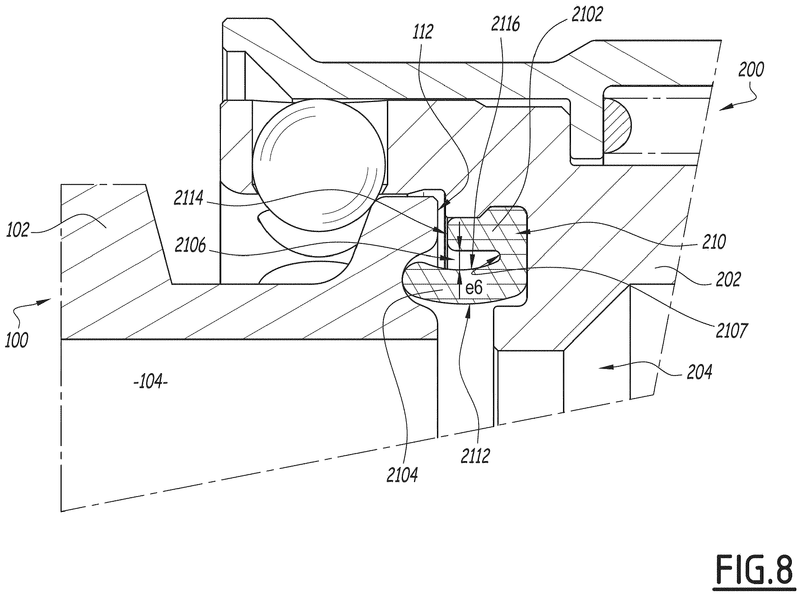

A l'inverse, et comme représenté à la figure 8, lorsque la pression du fluide passant par les canaux internes 104 et 204 en configuration accouplée est inférieure à la pression régnant à l'extérieur, la pression la plus élevée s'applique sur la surface radiale externe 2116 de la lèvre 2104, ce qui tend à plaquer la lèvre, particulièrement le bord avant 2110, contre un bord radial interne de la rainure 114 et à déformer la lèvre 2104 radialement vers l'intérieur, par rapport à une configuration où les pressions sont équivalentes de part et d'autre du joint d'étanchéité 210, c'est à dire entre l'extérieur et l'intérieur du raccord. La surface radiale interne 2112 de la lèvre 2104 adopte alors une configuration bombée avec sa concavité tournée à l'opposé de l'axe longitudinal X2. L'épaisseur e6 de l'entaille 2106 augmente localement et la surface radiale externe 2116 s'éloigne localement de la base 2102, par rapport à la configuration désaccouplée de l'élément femelle 200.

La forme convexe et arrondie du bord libre avant 2110 permet une adaptation optimale du joint d'étanchéité 210 aux variations de géométrie de la rainure circonférentielle 114, au basculement du corps 102 dans le corps 202 en configuration accouplée et aux différentiels de pression de part et d'autre du joint d'étanchéité 210 en configuration accouplée.

Pour désaccoupler les éléments mâle et femelle du raccord, l'opérateur fait coulisser la bague 2066 le long du corps 202 jusqu'à atteindre sa deuxième position, ce qui libère les billes 2062 qui peuvent alors se déplacer vers leur position externe pour libérer le passage pour le corps 102 de l'embout 100 hors du corps 202 de l'élément femelle de raccord 200.

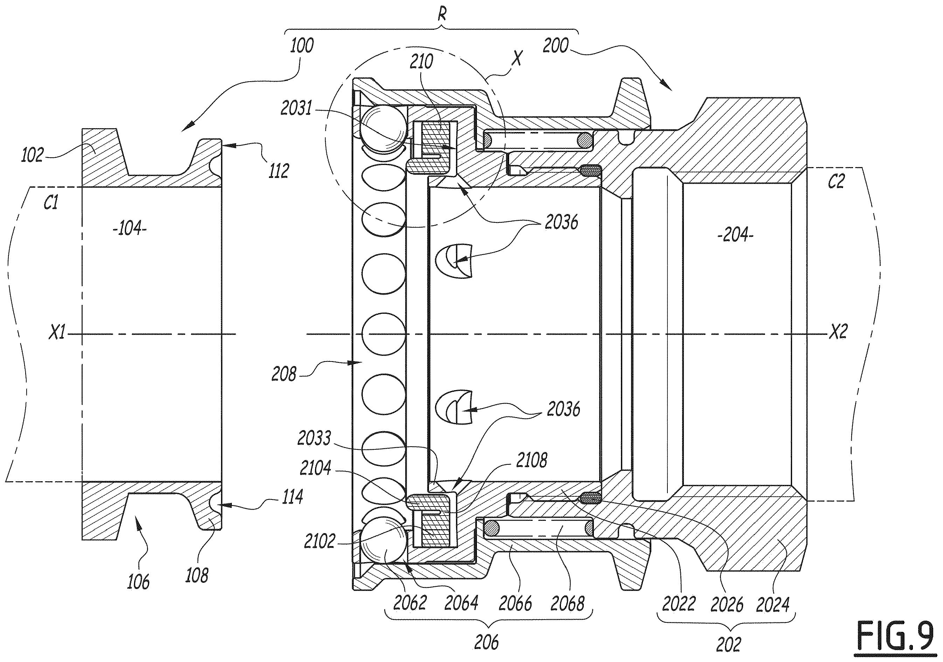

Dans le deuxième mode de réalisation représenté aux figures 9 à 11, les éléments analogues à ceux du premier mode de réalisation portent les mêmes références. Si une référence est mentionnée ci-après sans être visible sur les figures 9 à 11 ou si une référence est utilisée sur l'une des figures 9 à 11 sans être mentionnée dans la description, elle correspond à l'objet portant la même référence dans le premier mode de réalisation. Dans ce qui suit, on écrit principalement ce qui distingue ce mode de réalisation du précédent.

Ici, la chambre C202 est définie axialement entre une surface distale 2030 et une surface proximale 2031 qui sont toutes deux axiales.

Dans ce mode de réalisation, il n'est pas prévu de surface axiale frontale comparable à la surface axiale frontale 2028 du premier mode de réalisation.

En outre, la chambre C202 est délimitée radialement vers l'intérieur par la paroi radiale interne 2033 dont la surface axiale frontale 2034 est destinée à recevoir en appui la face avant 112 de l'embout mâle, plus précisément la partie annulaire de la face avant 112 qui est entourée radialement par la rainure circonférentielle 114, en cas de basculement selon un mouvement comparable à celui représenté par la flèche E1 à la figure 8, pour le premier mode de réalisation.

Ici, la paroi radiale interne 2033 est pourvue de plusieurs passages 2036 pour le fluide transitant dans le canal interne 204 de l'élément femelle de raccord 200.

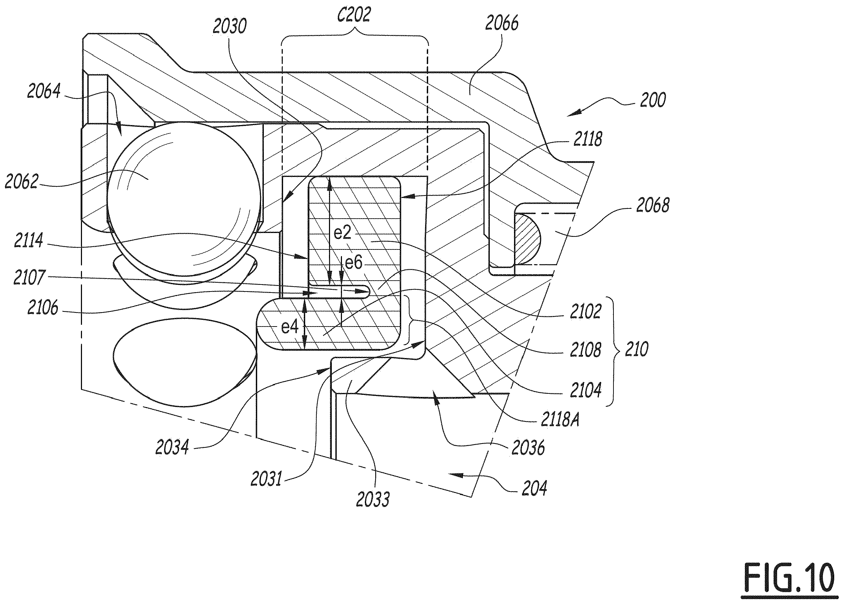

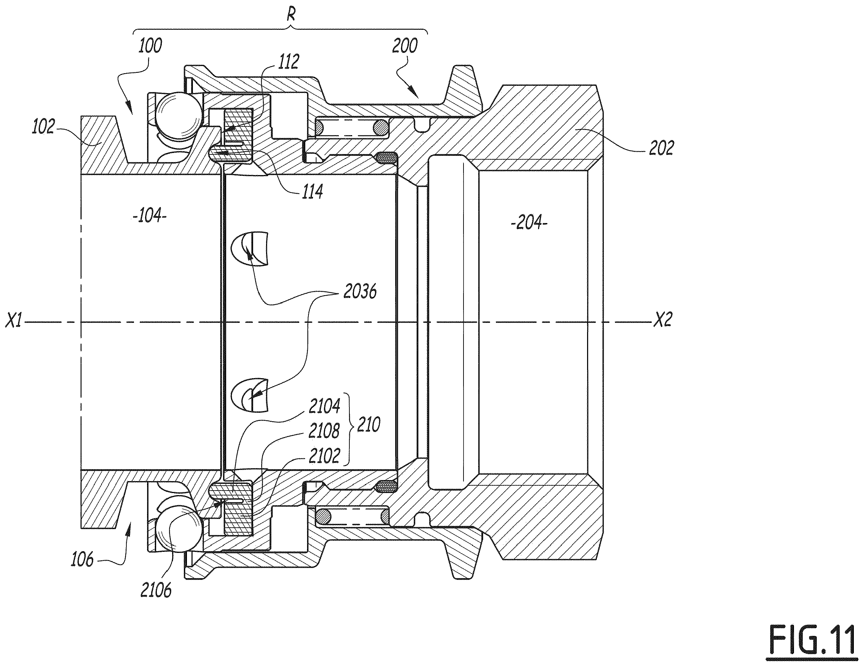

Comme dans le premier mode de réalisation, le joint d'étanchéité 210 comprend une base 2102 et une lèvre 2104 séparées par une entaille 2106 dont le fond 2107 est délimité par une portion de jonction 2108 reliant la base 2102 et la lèvre 2104. La base 2102 n'est pas montée à jeu longitudinal réduit entre les surfaces distale 2030 et proximale 2031 et peut se retrouver dans une configuration décalée axialement à la fois de la surface distale 2030 et de la surface proximale 2031 lorsque l'élément femelle de raccord 200 est dans une configuration désaccouplée, comme représenté aux figures 9 et 10. Dans cette position, la surface arrière 2118 du joint d'étanchéité 210 est décalée axialement vers l'avant par rapport à la surface proximale 2031, alors que la surface axiale, frontale avant 2114 de la base 2102 est décalée axialement vers l'arrière par rapport à la surface distale 2030. Au début du mouvement d'accouplement, le joint d'étanchéité 210 est repoussé jusqu'à parvenir en appui arrière par sa surface 2118 contre la surface proximale 2031 de la chambre C202, plus particulièrement en contact par une portion 2118A de la surface 2118 alignée longitudinalement avec la lèvre 2104, donc en particulier avec un bord avant 2110 de la lèvre 2104. Cette position du joint d'étanchéité 210 dans la chambre C202, qui est également valable en configuration accouplée du raccord fluidique R, est visible à la figure 11.

En variante non-représentée applicable aux deux modes de réalisation représentés sur les figures, le corps 202 peut être dépourvu de paroi radiale interne, auquel cas la surface proximale 2031 de la chambre C202 s'étend jusqu'au canal interne 204.

Selon une autre variante, également non représentée, des organes de verrouillage autres que des billes peuvent être utilisés, notamment des doigts ou des segments, tels que ceux décrits dans EP-A-1 531 297. De tels organes de verrouillage sont mobiles par rapport au corps 202 radialement à l'axe X2 dans la mesure où ils sont plus éloignés de l'axe X2 en position externe qu'en position interne.

Le nombre d'organes de verrouillage peut être différent de 24, tout en restant supérieur ou égal à 2.

Selon encore une autre variante non-représentée de l'invention, la face avant 112 de l'embout mâle 100 peut être étagée, avec une portion annulaire entourant la rainure circonférentielle 114 qui est située plus en avant du corps 102 qu'une portion annulaire située entre la rainure circonférentielle et le débouché du canal interne 104. Une telle géométrie est connue, par exemple, de EP-A-3 220 034. Dans ce cas, la rainure circonférentielle 114 n'est pas symétrique et la profondeur longitudinale de la rainure à considérer est la profondeur du côté de la portion annulaire de la face avant 112 qui entoure radialement la rainure circonférentielle 114.

Selon une variante non représentée de l'invention, la lèvre 2104 peut être disposée radialement à l'extérieur de la base 2102.

Selon une variante non représentée de l'invention, un diamètre interne minimal du joint d'étanchéité peut ne pas être défini par une dimension interne de la lèvre, mais par une dimension interne d'une base additionnelle du joint, monobloc avec la base 2102, qui est disposée radialement à l'intérieur de la base 2102, de la lèvre 2104 et de la portion de jonction 2108. De préférence la longueur de cette base additionnelle est inférieure à la longueur L2108 de la portion de jonction 2108.

En variante non représentée, le raccord fluidique de l'invention est configuré pour raccorder deux canalisations de liquide.

Quel que soit le mode de réalisation, le joint d'étanchéité 210 vient en appui contre la surface proximale 2031 du corps 202 de l'élément femelle de raccord 200, par sa surface arrière 2118. Le contact entre le joint d'étanchéité 210 et le corps 202 a, en particulier, lieu au niveau de la portion 2118A de la surface arrière 2118, donc sur l'arrière et dans l'alignement du bord avant 2110, et le contact entre le joint d'étanchéité 210 et le corps 102 a, en particulier, lieu au niveau de la rainure circonférentielle 114, donc sur l'avant et dans l'alignement du bord avant 2110, ce qui met en compression la lèvre 2104 disposée longitudinalement entre la portion de surface 2188A et le bord libre avant 2110. Cela garantit une prise d'étanchéité effective entre le joint d'étanchéité et le corps lors de l'accouplement des éléments 100 et 200 du raccord fluidique, cette prise d'étanchéité étant aussi bien adaptée au cas d'une pression extérieure supérieure à la pression à l'intérieur du raccord qu'au cas d'une pression extérieure inférieure à la pression à l'intérieur du raccord. La base 2102 du joint d'étanchéité, plus massive que la lèvre 2104 du fait que l'épaisseur radiale e2 est supérieure à l'épaisseur radiale e4, permet un positionnement précis de la lèvre 2104 vis-à-vis du corps 202 de l'élément femelle de raccord 200, ainsi que vis-à-vis de l'embout complémentaire 100, tout particulièrement de sa rainure circonférentielle 114. La construction du joint d'étanchéité 210, avec une base 2102, une lèvre 2104 et une entaille périphérique 2106 permet une déformation relativement aisée de la lèvre en cours d'accouplement des éléments du raccord fluidique et en configuration accouplée, par élargissement ou rétrécissement de l'entaille périphérique 2106 et/ou par déformation de la lèvre dans le volume correspondant au jeu radial J. Il en résulte que l'effort nécessaire à l'accouplement des éléments du raccord fluidique R est réduit par rapport au cas où la lèvre 2104 serait enchâssée dans un logement serré. Une déformation de la lèvre 2104 en configuration accouplée demeure possible sous l'effet des pressions s'exerçant de part et d'autre du joint d'étanchéité, c'est à dire entre l'extérieur et l'intérieur du raccord, ou sous l'effet d'un basculement relatif des corps 102 et 202 des éléments 100 et 200 du raccord fluidique R. La construction du joint d'étanchéité 210 avec une base, une lèvre et une entaille permet également que la lèvre 2104 ait une longueur libre L2104 relativement importante, ce qui facilite sa déformation, sans augmenter de façon trop importante l'encombrement longitudinal du joint, notamment sa longueur maximale L210. Comme la base 2102 s'étend, vers l'avant par rapport à la portion de jonction 2108, sur une longueur L2106 égale à environ la moitié de la longueur libre L2104 de la lèvre 2104, la base forme un obstacle à une trop grande déformation radiale externe du joint d'étanchéité 210, en particulier à une déformation radiale qui serait supérieure à l'épaisseur radiale e6 de l'entaille périphérique 2106, en cours d'accouplement ou en configuration accouplée du raccord fluidique R. En outre, la paroi radiale interne 2033 forme un obstacle à une trop grande déformation radiale interne du joint d'étanchéité 210, en cours d'accouplement ou en configuration accouplée du raccord fluidique R.

Les modes de réalisation et variantes envisagés ci-dessus peuvent être combinés pour générer de nouveaux modes de réalisation de l'invention.

## Revendications

1. Elément femelle (200) de raccord (R) apte à être accouplé avec un embout (100) complémentaire pour la jonction de deux canalisations (C1, C2) de fluide, l'élément femelle de raccord comprenant

   - un corps (202) de réception de l'embout (100), ce corps étant centré sur un axe longitudinal (X2) et délimitant, au sein du corps, un canal interne (204) de circulation de fluide qui s'étend entre un côté avant de l'élément femelle (200), orienté vers l'embout (100) pendant un emmanchement de l'élément femelle et de l'embout, et un côté arrière de l'élément femelle, orienté vers une canalisation (C2) à laquelle cet élément femelle est raccordable ;
   - un mécanisme de verrouillage (206) comprenant

     ◦ plusieurs organes de verrouillage (2062), mobiles par rapport au corps, radialement à l'axe longitudinal, entre une position interne de blocage de l'embout dans le corps et une position externe de libération du passage de l'embout dans le corps,
     ◦ une bague de blocage (2066) montée autour du corps et mobile entre une première position de blocage des organes de verrouillage dans leur position interne et une deuxième position dans laquelle la bague de blocage ne s'oppose pas au déplacement des organes de verrouillage vers leur position externe ; et

- un joint d'étanchéité (210) configuré pour coopérer avec l'embout (100), ce joint d'étanchéité étant logé dans le corps (202), autour du canal interne (204), et comprenant

    ◦ une base (2102) disposée en regard, vers l'arrière, d'une surface proximale (2031) du corps (202) et en regard, vers l'avant, d'une surface distale (2030) du corps (202), et
    ◦ une lèvre (2104), dans lequel

- la lèvre (2104) s'étend parallèlement à l'axe longitudinal (X2) et vers l'avant, en dépassant de la base et en présentant un bord libre avant (2110) ;
- le joint d'étanchéité (210) présente une entaille périphérique (2106) qui est disposée, radialement à l'axe longitudinal (X2), entre la base (2102) et la lèvre (2104), qui débouche sur l'avant du joint d'étanchéité (210) et dont un fond (2107) est délimité sur l'arrière par une portion de jonction (2108) du joint d'étanchéité (210) reliant la base et la lèvre ; et
- le joint d'étanchéité (210) est configuré pour venir en appui arrière contre la surface proximale (2031), dans l'alignement du bord libre avant (2110) de la lèvre, selon une direction parallèle à l'axe longitudinal (X2).

2. Elément femelle de raccord selon la revendication 1, **caractérisé en ce que**, en configuration désaccouplée de l'élément femelle de raccord (200), un rapport (L2106/L2104) entre, d'une part, une longueur (L2106) de l'entaille périphérique (2106) mesurée parallèlement à l'axe longitudinal (X2) et, d'autre part, une longueur libre (L2104) de la lèvre (2104) mesurée parallèlement à l'axe longitudinal entre le fond (2107) de l'entaille périphérique et le bord libre avant (2110) de la lèvre, est compris entre 0,4 et 0,6, de préférence égal à environ 0,5.

3. Elément femelle de raccord selon l'une des revendications précédentes, **caractérisé en ce que**, en configuration désaccouplée de l'élément femelle de raccord (200), un rapport (L2104/L210) entre, d'une part, une longueur libre (L2104) de la lèvre (2104) mesurée parallèlement à l'axe longitudinal (X2) entre le fond (2107) de l'entaille périphérique et le bord libre avant (2110) de la lèvre et, d'autre part, une longueur maximale (L210) du joint d'étanchéité (210), mesurée parallèlement à l'axe longitudinal, est supérieur ou égal à 0,7.

4. Elément femelle de raccord selon l'une des revendications précédentes, **caractérisé en ce que**, en configuration désaccouplée de l'élément femelle de raccord (200), le bord libre avant (2110) de la lèvre (2104) présente une forme convexe.

5. Elément femelle de raccord selon l'une des revendications précédentes, **caractérisé en ce que**, en configuration désaccouplée de l'élément femelle de raccord (200), à un même niveau radial (D6), le joint d'étanchéité (210) s'étend sans discontinuité depuis le bord libre avant (2110) jusqu'à une surface arrière (2118) du joint d'étanchéité (210) configurée pour venir en appui arrière contre la surface proximale (2031).

6. Elément femelle de raccord selon l'une des revendications précédentes, **caractérisé en ce que**, en configuration désaccouplée de l'élément femelle de raccord (200), la lèvre (2104) a, à l'arrière du bord libre avant (2110), une épaisseur radiale (e4) qui est constante.

7. Elément femelle de raccord selon l'une des revendications précédentes, **caractérisé en ce que**, en configuration désaccouplée de l'élément femelle de raccord (200), un rapport entre, d'une part, une épaisseur radiale (e6) de l'entaille périphérique (2106) et, d'autre part, une épaisseur radiale (e4) de la lèvre (2104), est inférieur ou égal à 0,4, à un même niveau le long de l'axe longitudinal (X2).

8. Elément femelle de raccord selon l'une des revendications précédentes, **caractérisé en ce que**, en configuration désaccouplée de l'élément femelle de raccord (200), au niveau de l'entaille périphérique (2106), la base (2102) a une épaisseur radiale (e2) strictement supérieure à une épaisseur radiale (e4) de la lèvre.

9. Elément femelle de raccord selon l'une des revendications précédentes, **caractérisé en ce que**, en configuration désaccouplée de l'élément femelle de raccord (200),

    - une surface axiale frontale (2028) du corps (202), tournée vers l'avant, fait face, selon une direction parallèle à l'axe longitudinal (X2), aux organes de verrouillage (2062) lorsqu'ils sont dans leur position interne ;
    - la lèvre (2104) s'étend dans un volume situé, radialement à l'axe longitudinal, à l'intérieur de la surface axiale frontale (2028); et
    - la lèvre (2104) fait saillie vers l'avant, par rapport à la surface axiale frontale (2028), sur une longueur (L"210) non nulle.

10. Elément femelle de raccord selon l'une des revendications précédentes, **caractérisé en ce que**

    - le corps (202) comprend une paroi radiale interne (2033) ménagée, radialement à l'axe longitudinal (X2), à l'intérieur de la surface proximale (2031) et, axialement le long de l'axe longitudinal, à l'avant de la surface proximale ;
- en configuration désaccouplée de l'élément femelle de raccord (200), une surface radiale interne (2112) de la lèvre (2104) est en regard, radialement à l'axe longitudinal (X2), de la paroi radiale interne (2033), avec un jeu radial (J) d'épaisseur non nulle et la lèvre dépasse de la paroi radiale interne (2033) vers l'avant.

11. Elément femelle de raccord selon l'une des revendications précédentes, **caractérisé en ce que** la base (2102) du joint d'étanchéité (210) est montée, selon une direction parallèle à l'axe longitudinal (X2), entre la surface proximale (2031) et la surface distale (2030), avec un jeu longitudinal inférieur à 5% d'une dimension longitudinale maximale mesurée entre la surface axiale proximale (2031) et la surface distale (2030).

12. Elément femelle de raccord selon l'une des revendications précédentes, **caractérisé en ce que**, en configuration désaccouplée de l'élément femelle de raccord (200), un diamètre interne minimal (D5) du joint d'étanchéité (210) est défini par une dimension interne de la lèvre (2104).

13. Elément femelle de raccord selon l'une des revendications précédentes, **caractérisé en ce que** la base (2102) est en contact radial externe avec le corps (202).

14. Raccord (R) comprenant un élément femelle de raccord (200), et un embout (100) complémentaire, l'embout étant pourvu

   - d'un canal interne (104) de passage de fluide,
   - d'une cavité externe (106) de réception des organes de verrouillage (2062) de l'élément femelle de raccord (200), en configuration accouplée du raccord (R),
   - d'une face avant (112) qui entoure le canal interne (104), et
   - d'une rainure circonférentielle (114) ménagée sur la face avant (112), **caractérisé en ce que** l'élément femelle de raccord (200) est selon l'une des revendications précédentes et **en ce que**, en configuration accouplée du raccord, la lèvre (2104) du joint d'étanchéité (210) de l'élément femelle de raccord est engagée dans, et en contact avec, la rainure circonférentielle (114).

15. Raccord selon la revendication 14, **caractérisé en ce que**

   - l'élément femelle de raccord (200) est selon la revendication 9 ;
   - lorsque le joint d'étanchéité (210) est en appui arrière contre la surface proximale (2031), dans l'alignement du bord libre avant (2110) de la lèvre selon une direction parallèle à l'axe longitudinal (X2), un rapport (L"210/P114) entre, d'une part, une longueur (L"210) sur laquelle la lèvre (2104) fait saillie vers l'avant de la surface axiale frontale (2028) du corps (202) de l'élément femelle de raccord (200) et, d'autre part, une profondeur maximale (P114) de la rainure circonférentielle (114) par rapport à la face avant (112), est supérieur ou égal à 1, de préférence supérieur ou égal à 1,5.

**Patentansprüche**

1. Buchsenelement (200) zum Anschließen (R), das geeignet ist, mit einem komplementären Ansatzstück (100) zum Verbinden zweier Leitungen (C1, C2) von Fluid gekoppelt zu werden, das Anschlussbuchsenelement umfassend

   - einen Körper (202) zum Aufnehmen des Ansatzstücks (100), wobei dieser Körper auf einer Längsachse (X2) zentriert ist und innerhalb des Körpers einen inneren Kanal (204) für die Zirkulation eines Fluids begrenzt, der sich zwischen einer Vorderseite des Buchsenelements (200), die während eines Einsteckens des Buchsenelements und des Ansatzstücks zum Ansatzstück (100) hin gerichtet ist, und einer Rückseite des weiblichen Elements, die zu einer Kanalisation (C2) hin gerichtet ist, an die dieses Buchsenelement anschließbar ist, erstreckt;
   - einen Verriegelungsmechanismus (206), umfassend

      ∘ mehrere Verriegelungsorgane (2062), die in Bezug auf den Körper radial zu der Längsachse zwischen einer inneren Position zum Blockieren des Ansatzstücks in dem Körper und einer äußeren Position zum Freigeben des Durchgangs des Ansatzstücks in dem Körper beweglich sind,
      ∘ einen Arretierring (2066), der um den Körper montiert und zwischen einer ersten Arretierposition der Verriegelungsorgane in ihrer inneren Position, und einer zweiten Position, in der der Arretierring der Bewegung der Verriegelungsorgane in ihre äußere Position nicht entgegenwirkt, beweglich ist; und

   - eine Dichtung (210), die konfiguriert ist, um mit dem Ansatzstück (100) zusammenzuwirken, wobei die Dichtung in dem Körper (202) um den inneren Kanal (204) untergebracht ist und Folgendes umfasst

◦ eine Basis (2102), die nach hinten gegenüber einer proximalen Fläche (2031) des Körpers (202) und nach vorne gegenüber einer distalen Fläche (2030) des Körpers (202) angeordnet ist, und
◦ eine Lippe (2104),
wobei

- die Lippe (2104) sich parallel zu der Längsachse (X2) und nach vorne erstreckt, über die Basis hervorsteht und einen vorderen freien Rand (2110) aufweist;
- die Dichtung (210) einen peripheren Einschnitt (2106) aufweist, der radial zu der Längsachse (X2) zwischen der Basis (2102) und der Lippe (2104) angeordnet ist, der sich an der Vorderseite der Dichtung (210) öffnet und dessen Boden (2107) an der Rückseite durch einen Verbindungsabschnitt (2108) der Dichtung (210) begrenzt ist, der die Basis und die Lippe verbindet; und
- die Dichtung (210) konfiguriert ist, um in einer Richtung parallel zu der Längsachse (X2) hinter der proximalen Fläche (2031) in Ausrichtung mit dem vorderen freien Rand (2110) der Lippe in Anlage zu kommen.

2. Anschlussbuchsenelement nach Anspruch 1, **dadurch gekennzeichnet, dass** in der entkoppelten Konfiguration des Anschlussbuchsenelements (200) ein Verhältnis (L2106/L2104) zwischen einerseits einer parallel zu der Längsachse (X2) gemessenen Länge (L2106) des peripheren Einschnitts (2106) und, andererseits einer freien Länge (L2104) der Lippe (2104), die parallel zu der Längsachse zwischen dem Boden (2107) des peripheren Einschnitts und dem vorderen freien Rand (2110) der Lippe gemessen wird, zwischen 0,4 und 0,6, vorzugsweise etwa 0,5, liegt.

3. Anschlussbuchsenelement nach einem der vorherigen Ansprüche, **dadurch gekennzeichnet, dass** in einer entkuppelten Konfiguration des Anschlussbuchsenelements (200) ein Verhältnis (L2104/L210) zwischen einerseits einer freien Länge (L2104) der Lippe (2104) gemessen parallel zu der Längsachse (X2) zwischen dem Boden (2107) des peripheren Einschnitts und dem vorderen freien Rand (2110) der Lippe, und andererseits einer maximalen Länge (L210) der Dichtung (210), gemessen parallel zu der Längsachse, größer als oder gleich wie 0,7 ist.

4. Anschlussbuchsenelement nach einem der vorherigen Ansprüche, **dadurch gekennzeichnet, dass** der vordere freie Rand (2110) der Lippe (2104) in der entkoppelten Konfiguration des Anschlussbuchsenelements (200) eine konvexe Form aufweist.

5. Anschlussbuchsenelement nach einem der vorherigen Ansprüche, **dadurch gekennzeichnet, dass** sich die Dichtung (210) in der entkoppelten Konfiguration des Anschlussbuchsenelements (200) auf einer gleichen radialen Ebene (D6) ohne Unterbrechung von dem vorderen freien Rand (2110) bis zu einer hinteren Fläche (2118) der Dichtung (210) erstreckt, die konfiguriert ist, um hinter der proximalen Fläche (2031) in Anlage zu kommen.

6. Anschlussbuchsenelement nach einem der vorherigen Ansprüche, **dadurch gekennzeichnet, dass** die Lippe (2104) in der entkuppelten Konfiguration des Anschlussbuchsenelements (200) hinter dem vorderen freien Rand (2110) eine radiale Stärke (e4) aufweist, die konstant ist.

7. Anschlussbuchsenelement nach einem der vorherigen Ansprüche, **dadurch gekennzeichnet, dass** ein Verhältnis zwischen einerseits einer radialen Stärke (e6) des radialen Einschnitts (2106) und andererseits einer radialen Stärke (e4) der Lippe (2104) auf einer gleichen Ebene entlang der Längsachse (X2) in einer entkoppelten Konfiguration des Anschlussbuchsenelements (200) kleiner als oder gleich wie 0,4 ist.

8. Anschlussbuchsenelement nach einem der vorherigen Ansprüche, **dadurch gekennzeichnet, dass** die Basis (2102) in der entkoppelten Konfiguration des Anschlussbuchsenelements (200) des radialen Einschnitts (2106) eine radiale Stärke (e2) aufweist, die strikt größer als eine radiale Stärke (e4) der Lippe ist.

9. Anschlussbuchsenelement nach einem der vorherigen Ansprüche, **dadurch gekennzeichnet, dass** das Anschlussbuchsenelement (200) in der entkoppelten Konfiguration eine konvexe Form aufweist,

- eine vordere axiale Fläche (2028) des Körpers (202), die nach vorne gerichtet ist, in einer Richtung parallel zu der Längsachse (X2) den Verriegelungsorganen (2062) gegenüberliegt, wenn sie in ihrer inneren Position sind;
- die Lippe (2104) sich in ein Volumen erstreckt, das sich radial zu der Längsachse innerhalb der vorderen axialen Fläche (2028) befindet; und
- die Lippe (2104) in Bezug auf die vordere axiale Fläche (2028) über eine Länge (L"210) ungleich Null nach vorne hervorsteht.

10. Anschlussbuchsenelement nach einem der vorherigen Ansprüche, **dadurch gekennzeichnet, dass**

- der Körper (202) eine radial innere Wand (2033) umfasst, die radial zu der Längsachse (X2) innerhalb der proximalen Fläche (2031) und axial entlang der Längsachse vor der proximalen Fläche ausgebildet ist;
- in der entkoppelten Konfiguration des Anschlussbuchsenelements (200) eine innere radiale Fläche (2112) der Lippe (2104) radial zu der Längsachse (X2) der radial inneren Wand (2033) mit einem radialen Spiel (J) mit einer Stärke ungleich Null gegenüberliegt und die Lippe von der radial inneren Wand (2033) nach vorne hervorsteht.

11. Anschlussbuchsenelement nach einem der vorherigen Ansprüche, **dadurch gekennzeichnet, dass** die Basis (2102) der Dichtung (210) in einer Richtung parallel zur der Längsachse (X2) zwischen der proximalen Fläche (2031) und der distalen Fläche (2030) mit einem Längsspielraum von weniger als 5 % einer maximalen Längsabmessung, gemessen zwischen der proximalen axialen Fläche (2031) und der distalen Fläche (2030), angeordnet ist.

12. Anschlussbuchsenelement nach einem der vorherigen Ansprüche, **dadurch gekennzeichnet, dass** ein minimaler Innendurchmesser (D5) der Dichtung (210) in der entkoppelten Konfiguration des Anschlussbuchsenelements (200) durch eine Innenabmessung der Lippe (2104) definiert ist.

13. Anschlussbuchsenelement nach einem der vorherigen Ansprüche, **dadurch gekennzeichnet, dass** die Basis (2102) in radialem Außenkontakt mit dem Körper (202) ist.

14. Anschluss (R), umfassend ein Anschlussbuchsenelement (200), und ein komplementäres Ansatzstück (100), wobei das Ansatzstück versehen ist mit

- einem inneren Kanal (104) für den Durchgang von Fluid,
- einem äußeren Hohlraum (106) zu Aufnehmen der Verriegelungselemente (2062) des Anschlussbuchsenelements (200) in der gekoppelten Konfiguration des Anschlusses (R),
- einer Vorderseite (112), die den inneren Kanal (104) umgibt, und
- einer Umfangsnut (114), die auf der Vorderseite (112) ausgebildet ist,

**dadurch gekennzeichnet, dass** das Anschlussbuchsenelement (200) gemäß einem der vorherigen Ansprüche ist und dass die Lippe (2104) der Dichtung (210) des Anschlussbuchsenelements in der gekoppelten Konfiguration der Verbindung in die Umfangsnut (114) eingreift und diese berührt.

15. Anschluss nach Anspruch 14, **dadurch gekennzeichnet, dass**

- das Anschlussbuchsenelement (200) nach Anspruch 9 ist;
- wenn die Dichtung (210) rückseitig an der proximalen Fläche (2031) in Ausrichtung mit dem vorderen freien Rand (2110) der Lippe gemäß einer Richtung parallel zu der Längsachse (X2) anliegt, ein Verhältnis (L"210/P114) zwischen, einerseits, einer Länge (L"210), über die die Lippe (2104) von der vorderen axialen Fläche (2028) des Körpers (202) des Anschlussbuchsenelements (200) nach vorne hervorsteht, und andererseits einer maximalen Tiefe (P114) der Umfangsnut (114) in Bezug auf die Vorderseite (112) größer als oder gleich wie 1, vorzugsweise größer als oder gleich wie 1,5, ist.

## Claims

1. A female element (200) for a connector (R) able to be connected with a complementary spigot (100) for joining two pipes (C1, C2), the female connector element comprising

- a body (202) for receiving the spigot (100), this body being centered on a longitudinal axis (X2) and delimiting, within the body, an inner fluid circulation channel (204) which extends between a front face of the female element (200), oriented towards the spigot (100) during a press-fitting of the female element and the spigot, and a rear face of the female element, oriented towards a pipe (C2) to which this female element can be connected;
- a locking mechanism (206) comprising

    ∘ a plurality of locking members (2062), movable relative to the body, radial to the longitudinal axis, between an inner position of blocking the spigot in the body and an outer position of releasing the passage of the spigot in the body
    ∘ a blocking ring (2066) mounted around the body and movable between a first position of blocking the locking members in their inner position and a second position in which the blocking ring does not prevent movement of the locking members to their outer position; and

- a seal (210) configured to cooperate with the spigot (100), this seal being housed in the body (202), around the inner channel (204), and comprising

    ∘ a base (2102) arranged facing backward to a proximal surface (2031) of the body (202) and facing, forward to a distal surface (2030) of the body (202), and

◦ a lip (2104),

wherein

- the lip (2104) extends parallel to the longitudinal axis (X2) and forward, protruding from the base and presenting a free front edge (2110);
- the seal (210) presents a peripheral notch (2106) which is arranged radially to the longitudinal axis (X2) between the base (2102) and the lip (2104), which opens onto the front of the seal (210) and a bottom (2107) which is delimited on the back by a connecting portion (2108) of the seal (210) connecting the base and the lip; and
- the seal (210) is configured to come to press backward against the proximal surface (2031), in alignment with the free front edge (2110) of the lip, according to a direction parallel to the longitudinal axis (X2).

2. The female connector element according to claim 1, **characterized in that**, in the unconnected configuration of the female connector element (200), a ratio (L2106/L2104) between, on the one hand, a length (L2106) of the peripheral notch (2106) measured parallel to the longitudinal axis (X2) and, on the other hand, a free length (L2104) of the lip (2104) measured parallel to the longitudinal axis between the bottom (2107) of the peripheral notch and the free front edge (2110) of the lip, is between 0.4 and 0.6, preferably equal to about 0.5.

3. The female connector element according to one of the preceding claims, **characterized in that**, in the unconnected configuration of the female connector element (200), a ratio (L2104/L210) between, on the one hand, a free length (L2104) of the lip (2104) measured parallel to the longitudinal axis (X2) between the bottom (2107) of the peripheral notch and the free front edge (2110) of the lip, on the other hand, a maximum length (L210) of the seal (210), measured parallel to the longitudinal axis, is greater than or equal to 0.7.

4. The female connector element according to one of the preceding claims, **characterized in that**, in the unconnected configuration of the female connector element (200), the free front edge (2110) of the lip (2104) presents a convex shape.

5. The female connector element according to one of the preceding claims, **characterized in that**, in the unconnected configuration of the female connector element (200), at a same radial level (D6), the seal (210) extends continuously from the free front edge (2110) to a rear surface (2118) of the seal (210) configured to press backward against the proximal surface (2031).

6. The female connector element according to one of the preceding claims, **characterized in that**, in the unconnected configuration of the female connector element (200), the lip (2104) presents, behind the free front edge (2110), a radial thickness (e4) that is constant.

7. The female connector element according to one of the preceding claims, **characterized in that**, in the unconnected configuration of the female connector element (200), a ratio between, on the one hand, a radial thickness (e6) of the peripheral notch (2106) and, on the other hand, a radial thickness (e4) of the lip (2104), is less than or equal to 0.4, at a same level along the longitudinal axis (X2).

8. The female connector element according to one of the preceding claims, **characterized in that**, in the unconnected configuration of the female connector element (200), at the peripheral notch (2106), the base (2102) presents a radial thickness (e2) strictly greater than a radial thickness (e4) of the lip.

9. The female connector element according to one of the preceding claims, **characterized in that**, in the unconnected configuration of the female connector element (200),

- a front axial surface (2028) of the body (202), turned forward, faces, according to a direction parallel to the longitudinal axis (X2), the locking members (2062) when they are in their inner position ;
- the lip (2104) extends in a volume located, radially to the longitudinal axis, inside the front axial surface (2028); and
- the lip (2104) protrudes forward, relative to the front axial surface (2028), for a non-zero length (L"210).

10. The female connector element according to one of the preceding claims, **characterized in that**

- the body (202) comprises an inner radial wall (2033) arranged radially to the longitudinal axis (X2) inside the proximal surface (2031) and, axially along the longitudinal axis, in front of the proximal surface;
- in the unconnected configuration of the female connector element (200), a radial inner surface (2112) of the lip (2104) faces, radially to the longitudinal axis (X2), the radial inner wall (2033), with a non-zero thickness radial clearance (J) and the lip protrudes forward from the radial inner wall (2033).

11. The female connector element according to one of the preceding claims, **characterized in that** the base (2102) of the seal (210) is mounted, according to a direction parallel to the longitudinal axis (X2), between the proximal surface (2031) and the distal surface (2030), with a longitudinal clearance of less than 5% of a maximum longitudinal dimension measured between the axial proximal surface (2031) and the distal surface (2030).

12. The female connector element according to one of the preceding claims, **characterized in that**, in the unconnected configuration of the female connector element (200), a minimum inner diameter (D5) of the seal (210) is defined by an inner dimension of the lip (2104).

13. The female connector element according to one of the preceding claims, **characterized in that** the base (2102) is in outer radial contact with the body (202).

14. A connector (R) comprising a female connector element (200), and a complementary spigot (100), the spigot being provided with

> - an inner channel for passage of fluid (104)
> - an outer cavity (106) for receiving the locking members (2062) of the female connector element (200), in the connected configuration of the connector (R),
> - a front face (112) surrounding the inner channel (104), and
> - a circumferential groove (114) arranged on the front face (112),

**characterized in that** the female connector element (200) is, according to one of the preceding claims and **in that**, in the connected configuration of the connector, the lip (2104) of the seal (210) of the female connector element is engaged in, and in contact with, the circumferential groove (114).

15. The connector according to claim 14, **characterized in that**

> - the female connector element (200) is according to claim 9 ;
> - when the seal (210) is pressing backward against the proximal surface (2031), in alignment with the free front edge (2110) of the lip according to a direction parallel to the longitudinal axis (X2), a ratio (L"210/P114) between, on the one hand, a length (L"210) over which the lip (2104) protrudes forward from the front axial surface (2028) of the body (202) of the female connector element (200), and, on the other hand, a maximum depth (P114) of the circumferential groove (114) relative to the front face (112), is greater than or equal to 1, preferably greater than or equal to 1.5.

FIG.1

**FIG.2**

FIG.3

EP 4 227 566 B1

FIG.4

EP 4 227 566 B1

FIG.5

22

FIG.6

EP 4 227 566 B1

FIG.7

EP 4 227 566 B1

FIG.9

EP 4 227 566 B1

FIG.10

EP 4 227 566 B1

EP 4 227 566 B1

## RÉFÉRENCES CITÉES DANS LA DESCRIPTION

### Documents brevets cités dans la description

- EP 3220034 A
- GB 1408537 A
- US 2708124 A
- KR 101782903 A
- EP 1531297 A